**Europäisches Patentamt**

**European Patent Office**

**Office européen des brevets**

(11) Veröffentlichungsnummer: **0 470 444 B1**

# EUROPÄISCHE PATENTSCHRIFT

(45) Veröffentlichungstag der Patentschrift: **28.06.95**

(51) Int. Cl.6: **C08B 11/193**, C09K 7/02, C04B 24/10

(21) Anmeldenummer: **91112474.1**

(22) Anmeldetag: **25.07.91**

(54) **Dihydroxypropylsulfoethylcellulosen, ihre Herstellung und Verwendung.**

(30) Priorität: **07.08.90 DE 4024968**

(43) Veröffentlichungstag der Anmeldung:
**12.02.92 Patentblatt 92/07**

(45) Bekanntmachung des Hinweises auf die
Patenterteilung:
**28.06.95 Patentblatt 95/26**

(84) Benannte Vertragsstaaten:
**BE DE FR GB IT NL SE**

(56) Entgegenhaltungen:
**EP-A- 0 319 865**
**FR-A- 2 265 761**
**US-A- 4 096 326**
**US-A- 4 519 923**

(73) Patentinhaber: **Wolff Walsrode Aktiengesellschaft**
**Postfach 15 15**
**D-29655 Walsrode (DE)**

(72) Erfinder: **Breckwoldt, Jörn, Dr.**
**Rostocker Strasse 55**
**W-2720 Rotenburg (DE)**
Erfinder: **Szablikowski, Klaus, Dr.**
**Claudiusstrasse 5**
**W-3030 Walsrode (DE)**

(74) Vertreter: **Braun, Rolf, Dr. et al**
**Bayer AG**
**Konzernverwaltung RP**
**Patentabteilung**
**D-51368 Leverkusen (DE)**

**Beschreibung**

Die Erfindung betrifft reversibel vergelbare, wasserlösliche Dihydroxypropylsulfoethylcelluloseether, ihre Herstellung und Verwendung.

Für verarbeitungs- und anwendungstechnische Zwecke sind Celluloseether von Vorteil, die in wäßrigen Systemen von Elektrolyten nicht beeinflußbar, nicht zum Schäumen neigen, und reversibel vergelbar sind. In der Patentliteratur sind Cellulosemischether, die einen Dihydroxypropylsubstituenten tragen beschrieben.

In US-A-4 013 821 ist ein Verfahren zur Herstellung von Cellulosemischethern, die neben Alkyl-, Hydroxyalkyl- oder Carboxyalkylgruppen noch 2,3-Dihydroxypropylgruppen enthalten beschrieben, Ausgangsstoffe für die Veretherung mit Glycidol sind die bereits wasserlöslichen Alkyl-, Hydroxyalkyl- bzw. Carboxyalkylcellulosen. Über die Chemikalienausbeute bezogen auf Glycidol sind keine Angaben veröffentlicht.

US-A-4 096 326 beansprucht die Reaktionsprodukte von 3-Chloro-1,2-propandiol oder Glycidol und Celluloseethern mit einem molaren Substitutionsgrad bezogen auf die Dihydroxypropylgruppe größer als 1.4. Ausgangsstoffe für die hochsubstituierten thermoplastischen Dihydroxypropylmischether sind die Hydroxyethylcellulose, Hydroxypropylcellulose, Carboxymethylcellulose und Methylcellulose. Die Chemikalienausbeute bezogen auf Glycidol beträgt lediglich 15 %.

In der DE-A-32 38 278 wird ein Verfahren zur Herstellung von niedrigsubstituierten Carboxyalkylpolysaccharid(misch)-ethern mit verbesserter Wasserlöslichkeit beschrieben. Die Wasserlöslichkeit der niedrigsubstituierten Carboxymethylcellulose wird entscheidend durch die Mitveretherung von Alkylenoxiden, Alkylhalogeniden und/oder Glycid beeinflußt. Bevorzugt ist die Mitveretherung von Ethylenoxid und Propylenoxid.

Aus der US-A-4 523 010 sind nichtionische Dihydroxypropylhydroxyalkylcellulosen bekannt. In einer bevorzugten Ausführung des Patentes werden bereits wasserlösliche Hydroxyalkylcellulosen mit einem molaren Substitutionsgrad von 1,5 bis 3 mit Glycidol umgesetzt. Auch hier liegt die Chemikalienausbeute bezogen auf Glycidol nur bei ca. 40 %.

Eine Dihydroxypropylhydroxyethylcellulose mit einem molaren Substitutionsgrad MS mit Dihydroxypropylgruppen von 0,3 bis 1,3 ist in US-A-4 553 601 beschrieben. Ausgangsprodukt ist wiederum eine Hydroxyethylcellulose. Die Effizienz von Glycidol ist mit 50 % angegeben.

Aus der EP-A-0 176 940 sind wasserlösliche Celluloseether, die einen Dihydroxypropylsubstituenten mit einem molaren Substitutionsgrad von 0,3 bis 1,3 tragen bekannt. Die Wasserlöslichkeit der beanspruchten Produkte wird von vornherein durch die mit Glycidol zur Reaktion gebrachten Celluloseether, besonders bevorzugt ist eine Hydroxyethylcellulose, mitgebracht.

Ein Nachteil an den bekannten Produkten ist der hohe Substitutionsgrad zur Erreichung einer Wasserlöslichkeit sowie die niedrigen Chemikalienausbeuten an Glycidol während des Herstellungsverfahrens.

Der Erfindung lag die Aufgabe zugrunde, insbesondere niedrigsubstituierte wasserlösliche, reversibel vergelbare Celluloseether bereitzustellen. Eine weitere Aufgabe bestand in der Bereitstellung eines Herstellverfahrens mit hoher Chemikalienausbeute.

Gegenstand der Erfindung sind Celluloseether, dadurch gekennzeichnet, daß sie einen durchschnittlichen Substitutionsgrad mit Sulfoethylgruppen (DS-Sulfoethyl) von 0,05 bis 0,4 und einen molaren Substitutionsgrad mit 1.2-vicinale Dihydroxypropylgruppen, vorzugsweise 2,3-Dihydroxy propyl, (MS-Dihydroxypropyl) von 0,1 bis 1 aufweisen und in Wasser wenigstens 2 g in 100 g Wasser bei 25°C löslich sind.

Unter reversibel vergelbarem Celluloseether werden solche Verbindungen verstanden, die die Fähigkeit besitzen, mit Borverbindungen pH-reversible Gele zu bilden. Dieses Phänomen ist bei Polysacchariden bzw. Polysaccharidderivaten nur zu beobachten, wenn sie 1,2 vicinale Diolgruppierungen im Molekül enthalten (siehe hierzu Y. X. Zhang, J. Macromol. Chem. 1425 (8), 955 (1980) und J. K. Scumann in R. L. Davison, Handbook of Watervaluble Gums and Resins, Chapter 6, (1980)).

Der DS-Sulfoethyl beträgt in einer besonders bevorzugten Ausführungsform 0,1 bis 0,2 und der MS-Dihydroxypropyl 0,2 bis 0,5.

Gegenstand der Erfindung ist weiterhin ein Verfahren zur Herstellung eines niedrigsubstituierten Dihydroxypropylsulfoethylcelluloseethers, dadurch gekennzeichnet, daß das Verfahren in einer besonderen Ausführungsform in folgenden Schritten durchgeführt wird:

a. Bildung einer Alkalicellulose durch Umsetzung von Cellulose mit Alkali,

b. Umsetzung der Alkalicellulose mit einer Sulfoethylgruppe übertragenen Verbindung,

c. Dihydroxypropylierung nach Abschluß der Sulfoethylierung durch Zugabe einer Dihydroxypropylgruppe übertragenen Verbindung.

Es ist jedoch auch möglich, die Schritte b und c in einer Stufe zu vollziehen als auch die Umkehrung der Schritte b und c.

Als Ausgangsmaterial für das erfindungsgemäße Verfahren werden gemahlene Cellulosen, wie Bleichlinters oder Holzzellstoff verwendet. Die Viskositätsstufen der Produkte lassen sich durch die Auswahl der Cellulosen, die einen entsprechenden Durchschnittspolymerisationsgrad aufweisen, einstellen. Niedrigviskose Produkte können durch Verwendung von nach üblichen Verfahren oxidativ abgebauten Zellstoffen hergestellt werden.

Die Alkalisierung der Cellulose und ihre nachfolgende Veretherung wird in Anwesenheit von organischen Lösemitteln bei einem Gewichtsverhältnis des Lösemittels zur Cellulose von 5 bis 50•1, bevorzugt von 10 bis 25•1, besonders bevorzugt von 15 bis 20•1, durchgeführt werden, um zu gleichmäßig veretherten Produkten zu gelangen. Geeignete organische Lösemittel sind niedere Alkohole, die vorzugsweise 2 bis 4 Kohlenstoffatome pro Molekül enthalten, Ether mit vorzugsweise 2 bis 4 Kohlenstoffatome pro Molekül sowie Ketone mit vorzugsweise 2 bis 6 Kohlenstoffatomen pro Molekül oder Mischungen dieser Lösungsmittel.

Die Cellulose wird zur Alkalisierung mit der Natronlauge versetzt, wobei ihre Konzentration 40 bis 100 Gew.-%, vorzugsweise 100 Gew.-% betragen soll und die eingesetzte Menge nicht kleiner als 1,5 Mol Natriumhydroxid pro Mol Cellulose ist. Erfindungsgemäß erfolgt die Zugabe des Sulfoethylierungsmittels entweder vor der Natriumhydroxidzugabe oder nach der Alkalisierungsphase. Zur Veretherung wird das Reaktionsgemisch bis auf Temperaturen von 50 bis 100 °C, vorzugsweise 70 bis 90 °C aufgeheizt und das eingestellte Temperaturniveau bis zur vollständigen Umsetzung beibehalten. Vor der Zugabe des Dihydroxypropylierungsmittels wird das Reaktionsgemisch gekühlt, vorzugsweise auf Temperaturen unter 50 °C und gegebenenfalls wird ein Teil des Natriumhydroxids neutralisiert. Nun wird erneut auf Temperaturen von 50 bis 100 °C, vorzugsweise 70 bis 90 °C aufgeheizt und bei dieser Temperatur von 30 bis 120 Minuten, vorzugsweise 60 bis 90 Minuten, die Veretherungsreaktion durchgeführt.

Der Reaktionsansatz wird gekühlt und mit üblichen Mineralsäuren oder organischen Säuren neutralisiert.

In einer bevorzugten Ausführungsform wird die Neutralisation in Gegenwart von 0,05 bis 5 Gew.-% (bezogen auf die eingesetzte Cellulose) Borsäure durchgeführt. Die so erhaltenen Produkte lassen sich in Wasser leicht dispergieren und bilden schon nach kurzer Zeit ein stabiles Gel aus.

Die Reinigung der so erhaltenen Rohprodukte erfolgt mit wäßrig organischen Lösemitteln, vorzugsweise 70 %iges Methanol.

In einer weiteren bevorzugten Ausführungsform, in der als Veretherungsreagenzien das Natriumsalz der Vinylsulfonsäure und 2,3-Epoxypropanol verwendet werden, wird nach Beendigung der Veretherungsreaktion das Alkali mit wäßrig organischen Lösemitteln, vorzugsweise 70 %iges Methanol, extrahiert.

In überraschender Weise werden für die Dihydroxypropylsulfoethylcellulosen mit einem DS-Sulfoethyl von 0,05 bis 0,4 und einem MS-Dihydroxypropyl von 0,1 bis 1, besonders bevorzugt mit einem Sulfoethyl-DS von 0,1 bis 0,2 und einem Dihydroxypropyl-MS von 0,2 bis 0,5, folgende wünschenswerte Eigenschaften in einem Cellulosederivat vereinigt:

1. Löslichkeit in kaltem und heißem Wasser,
2. der pH-Wert hat auf die Viskosität der Lösungen keinen Einfluß,
3. Lösungen sind unempfindlich gegenüber Elektrolyten,
4. der Celluloseether wirkt in seinen Lösungen nicht grenzflächenaktiv, die Lösungen schäumen nicht,
5. Lösungen des Celluloseethers können reversibel vergelt werden,
6. die Herstellung des Celluloseethers kann durch eine besondere Auswahl der Veretherungsreagenzien ökologisch vorteilhaft gestaltet werden (keine Bildung von Salzen).

Bei den erfindungsgemäßen Celluloseethern haben die Bezeichnung DS (Degree of Substitution) und MS (Molarer Substitutionsgrad) die übliche Bedeutung:

In jeder Anhydroglucoseeinheit in dem Cellulosemolekül sind drei Hydroxylgruppen vorhanden.

DS      ist die durchschnittliche Anzahl der in der Cellulose substituierten Hydroxylgruppen pro Anhydroglucoseeinheit.

MS      ist die durchschnittliche Anzahl der Mole des mit der Cellulose kombinierten Reaktionspartners pro Anhydroglucoseeinheit.

Bevorzugte Mittel zur Übertragung der Sulfoethylgruppe sind Chlorethansulfonsäure und insbesondere das Natriumsalz der Vinylsulfonsäure.

Bevorzugte Dihydroxypropylierungsmittel sind Glycidylacetat, 3-Chloro-1,2-propandiol, 2,3-Epoxy-1,4-butandiol, besonders 2,3-Epoxypropanol (Glycidol).

Wäßrige Lösungen der erfindungsgemäß hergestellten Celluloseether unterliegen nur einer geringen Viskositätsänderung in einem pH-Bereich von 1 bis 12. Die Lösungen haben in einem pH-Bereich von 6,5 bis 8,0 die größte Viskositätsstabilität. Unter pH 3 kann die Lösung durch saure Hydrolyse etwas Viskositätsabfall zeigen. Unter stark alkalischen Bedingungen kann etwas oxidativer Abbau eintreten. Zur Verdeutlichung dieses Vorteils sind in Tabelle 1 die Löslichkeiten verschiedener Celluloseether im sauren Milieu zusammengetragen.

Tabelle 1

| Löslichkeiten verschiedener Celluloseether im sauren Milieu | | | | |
|---|---|---|---|---|
| Celluloseether | DS (CM bzw. (SE) | MS (HE) bzw. (DHP) | pH-Wert | Löslichkeit |
| CMC* | 0,9 | | 3,5 | - |
| CMHEC** | 0,3 | 0,7 | 2,8 | - |
| DHPSEC*** (erfindungsgemäß) | 0,18 | 0,19 | | + |

\* Carboxymethylcellulose, Handelsprodukt
\*\* gemäß US-A-2 618 632
\*\*\* gemäß Beispiel 5

Eine wichtige Eigenschaft der erfindungsgemäßen Celluloseether ist die Elektrolytstabilität ihrer wäßrigen Lösungen. Im Gegensatz zu den ebenfalls anionenaktiven Polyelektrolyten Carboxymethylcellulose (CMC) und Dihydroxypropylcarboxymethylcellulose (DHPCMC) wird sie nicht durch mehrwertige Ionen, wie z.B. $FE^{3+}$ und $Al^{3+}$ in üblicher Konzentration als wasserunlösliches Salz gefällt. Tabelle 2 gibt die Salzmenge in g an, die 100 g einer 2 %igen Lösung zugesetzt werden muß, ehe eine Fällung eintritt.

## Tabelle 2   Elektrolytstabilität von Celluloseethern

| Cellulose-ether | DS(CM)/(SE) | MS(DHP) | $FeCl_3$ | | $Al_2(SO_4)_3$ | |
|---|---|---|---|---|---|---|
| | | | 5 g | 10 g | 5 g | 10 g |
| CMC* | 0,9 | | - | - | - | - |
| DHPCMC** | 0,43 | 0,49 | - | - | - | - |
| DHPSEC*** (erfindungs-gemäß) | 0,18 | 0,19 | + | + | + | + |

\*     übliches Handelsprodukt
\*\*    gemäß DE-A-32 38 278
\*\*\*   gemäß Beispiel 5

-  =  Ausfällung
+  =  Stabilität

Wäßrige Lösungen der erfindungsgemäß hergestellten Celluloseether zeigen nur geringe grenzflächenaktive Eigenschaften und kaum Schaumneigung. Die Grenzflächenspannung 1 %iger Lösungen liegt im Bereich von 57 bis 65 mN/m (reines Wasser hat 72 mN/m). In Tabelle 3 ist die Grenzflächenspannung der erfindungsgemäßen DHPSEC einigen kommerziellen Celluloseethern gegenübergestellt. Die Grenzflächenspannung wurde nach der Ringabreißmethode gemessen, dabei wird die Spannung, die eine Feder einer Waage haben muß, um einen Ring aus einer 0,1 %igen Celluloseether-Lösung herauszuziehen bestimmt. Hierzu wurde ein Tensiometer der Firma Krüß verwendet.

4

Tabelle 3  Grenzflächenspannung von Celluloseethern
(entnommen aus E.D. Klug, Food Technology 24
(1979), 51)

| CE | DS | MS | Grenzflächen-spannung 0,1 %ige Lösung (mN/m) |
|---|---|---|---|
| CMC | 0,8 | | 71 |
| HEC | | 2,5 | 64 |
| MHPC | 1,6-1,7 | 0,1-0,2 | 44-50 |
| MC | 1,8 | | 47-53 |
| HPC | | 4 | 45 |
| DHPSEC* (erfindungs- gemäß) | 0,18 | 0,19 | 57-65 |

* gemäß Beispiel 5

Die erfindungsgemäß hergestellten ionischen Dihydroxypropylsulfoethylcellulosen bilden im wäßrigen Medium mit Polyvalenten Metallkationen, wie z.B. Zirkonium, Titan, Antimon oder Bor, in Form von Salzen oder Chelatkomplexen, stabile, elastische Gele.

Vernetzte Polymergele sind zur Erschließung von Öl und Erdgaslagerstätten von Interesse, Aus Lagerstätten in großer Tiefe und mit einer geringen Durchlässigkeit des Gesteins kann z.B. Erdgas wirtschaftlich gefördert werden, wenn nach dem Frac-Verfahren (hydraulic fracturing) mit Hilfe von hohem hydraulischem Druck und durch das Bohrloch eingespritzte Stützmittel (fracturing fluids) Gesteinsrisse von mehreren 100 m Länge erzeugt und damit künstliche Fließwege für das Gas geschaffen werden. Nach Abschluß der Frac-Behandlung muß das Gel vollständig aus der Formation entfernt werden. Metallionvernetzbare Celluloseether sind anionenaktive, modifizierte Hydroxyethylcellulosen, die z.B. Carbonsäuregruppen (US-A-4 035 195) oder Phosphorsäuregruppen (US-PS 4 396 433) enthalten. Zur Zeit wird als einziger anionischer Celluloseether eine Carboxymethylhydroxyethylcellulose in der Frac-Bohrung eingesetzt. Die Vernetzungsreaktion wird mit Titan- oder Aluminiumsalzen, gewöhnlicherweise bei einem pH-Wert von <5 durchgeführt. Unter diesen Bedingungen unterliegen die eingesetzten Celluloseether einem sauer katalysierten Abbau. Diese Gele sind somit weniger stabil als solche, die bei einem neutralen oder schwach alkalischen pH-Wert hergestellt werden.

Desweiteren reagieren die anionischen Celluloseether mit Eisenionen, wenn diese, wie gewöhnlich, in Stahltanks gelagert werden. Die Reaktion mit den Eisenionen führt zu einem Ausflocken des Celluloseethers.

Aus der Patentliteratur sind sowohl nichtionische "Hydraulic Fluids" mit vicinalen Dihydroxypropylgruppen (US-A-4 096 326; US-A-4 553 010; US-A-4 553 601 und EP-A 0 176 940) als auch ionische (US-A-4 096 326 und EP-A-0 176 940) bekannt.

Nachteilig an den modifizierten nichtionischen Hydroxyalkylcellulosen (HEC, HPC, HEHPC) sind einerseits der teilweise sehr hohe MS an vicinalen Dihydroxypropylgruppen (US-A-4 096 326) und andererseits die für die Wasserlöslichkeit erforderliche hohe molare Substitution an Hydroxyalkylgruppen.

Eine anionenaktive Dihydroxypropylcarboxymethylcellulose (DHPCMC) besitzt folgende Nachteile:

a. es ist teilweise ein sehr hoher molarer Substitutionsgrad an vicinalen Dihydroxypropylgruppen erforderlich (MS >1,4),

b. die DHPCMC besitzt eine Elektrolytunverträglichkeit, speziell mit Eisen- und Aluminiumionen (siehe oben),

c. schlechte Vergelbarkeit.

Gele, hergestellt mit den erfindungsgemäß beanspruchten Dihydroxypropylsulfoethylcellulosen weisen folgende wünschenswerte Eigenschaften auf:

1. Die Gele lassen sich durch hohe Scherkräfte nicht verflüssigen,

2. die Gele sind temperaturstabil,

3. die Vernetzung ist pH-reversibel, wenn die Vergelung mit Bor-Verbindungen initiiert worden ist.

Die metallischen komplexierenden Mittel, welche bislang verwendet wurden, umfassen Antimonsalze, Aluminiumsalze, Chromsalze und bestimmte organische Titanate, jedoch sind alle diese komplexierenden Mittel hinsichtlich ihrer Verwendbarkeit dadurch beschränkt, daß spezifische Bedingungen hinsichtlich pH-Wert, Temperatur, anderen Chemikalien usw. eingehalten werden müssen, damit die Komplexierungsreaktion zwischen dem komplexierenden Mittel und dem eingesetzten Polysaccharid stattfindet. Beispielsweise ist es bei Antimonkomplexierungsmitteln erforderlich, daß das wäßrige Gel einen spezifischen pH-Wert und eine spezifische Temperatur besitzt bevor die Komplexierungsreaktion erfolgt. Andere metallhaltige Komplexierungsmittel wie Chromsalze erfordern eine Oxidation/Reduktion für die Vernetzung.

Als besonders vorteilhaft für die Vernetzung von Polysacchariden werden Titan- und Zirkoniumverbindungen beschrieben (GB-A-2 108 122, EP-A-0 208 373). Nachteilig an diesen Verbindungen ist die schwere Zugänglichkeit und der Preis.

Als besonders vorteilhaft für die Vernetzung der erfindungsgemäß hergestellten Dihydroxypropylsulfoethylcellulosen haben sich Bor-Verbindungen herausgestellt. Geeignete Bor-Verbindungen sind, s. US-A-4 013 821, 4,35:

Erfolgte die Herstellung der erfindungsgemäßen DHPSEC nicht nach der bevorzugten Ausführungsform (siehe S. 6, Absatz 3), so wird die Bor-Verbindung in Wasser gelöst oder als Feststoff zur wäßrigen Lösung des Celluloseethers gegeben und kurz eingerührt. Die Vergelung tritt nach kurzer Zeit ein.

Schon bei Zusatzmengen von 0,2 bis 0,5 Gew.-% an Vernetzer führt dieses zu einem hervorragenden Gel. Durch Elektrolyte wird die Vernetzung nicht beeinflußt. In Tabelle 4 ist die Überlegenheit der erfindungsgemäß hergestellten Celluloseether einer Dihydroxypropylcarboxymethylcellulsoe gegenübergestellt.

## Tabelle 4

| | B o r a x | | | Triethanol-titanat |
| | 0,5 Gew.-% | 5 Gew.-% | 5 Gew.-%/Fe$^{3*}$ | 1 Gew.-% |
|---|---|---|---|---|
| DHPCMC* | - | + | - | - |
| DHPSEC** (erfindungs-gemäß) | + | + | + | + |

\*     gemäß DE-A-32 38 278
\*\*   gemäß Beispiel 5
-      keine Gelbildung
+     Gelbildung

Eine besondere Eigenschaft der erfindungsgemäß hergestellten Celluloseether ist ihre verflüssigende Wirkung in Zement- und Gipsputzsystemen. Sie sind dadurch als Zusatzstoff für Fließestriche auf Zement- oder Gipsbasis einsetzbar.

Beispiele

Die Messung der Viskositäten $V_2$ erfolgte mit einem Rotationsviskosimeter Haake, Typ RV 100, System M500, Meßeinrichtung MV, nach DIN 53 019, bei einer Schergeschwindigkeit D = 2,5 s$^{-1}$, bei einer Temperatur von 20°C. Es wurden jeweils 2 gew.-%ige Lösungen in destilliertem Wasser vermessen.

Beispiel 1

In einem mit Inertgas gespülten 3 l-Glasreaktor werden 127 g feingemahlener Holzzellstoff mit 3 l Isopropanol, welches 7,5 Gew.-% Wasser enthält aufgeschwemmt und mit 75,5 g NaOH (Prills) versetzt und 1 Stunde bei Raumtemperatur alkalisiert. Nach der Alkalisierung werden 0,24 Mol Vinylsulfonsäurenatriumsalz (VSSNa; 30 %ige wäßrige Lösung) zur Alkalicellulose gegeben. Die Temperatur im Glasreaktor wird langsam auf 70°C erhöht und bei dieser 90 min gehalten. Nach dem Abkühlen des Reaktors wird mit Essigsäure neutralisiert und mit 70 %igem Methanol gereinigt und getrocknet. Die so erhaltene Sulfoethylcellulose wird in 3 l Aceton, welches 2 Gew.-% Wasser enthält aufgeschwämmt und mit 31 g Natriumhydroxid versetzt und 1 Stunde bei Raumtemperatur alkalisiert. Der Reaktor wird auf 55°C aufgeheizt, und bei dieser Temperatur wird innerhalb von 15 min 87,3 g Glycidol zugetropft. Nach einer Veretherungszeit von 90 min wird mit Essigsäure neutralisiert und mit 70 %igem Methanol gereinigt und getrocknet.

Die entstandene DHPSEC weist folgende Substitutionsgrade auf:

| | |
|---|---|
| DS (SE): | 0,18 |
| MS (DHP): | 0,8 |

Die Chemikalienausbeute bezogen auf VSSNa beträgt 60 %. Die Chemikalienausbeute bezogen auf Glycidol beträgt 57 %.

Beispiel 2

In einem mit Inertgas gespülten 3 l-Glasreaktor werden 127 g feingemahlener hochviskoser Holzzellstoff mit 3 l Aceton aufgeschwemmt und mit 47,2 g NaOH (Prills) und 0,31 Mol VSSNa (30 %ige wäßrige Lösung) versetzt. Die Gesamtwassermenge im Slurry wird auf 5 Gew.-% eingestellt, Nach einer Alkalisierzeit von 80 min bei Raumtemperatur wird der Reaktionskolben langsam auf 55°C erwärmt. Nach einer Veretherungszeit von 90 min werden bei 55°C 52,4 g Glycidol innerhalb von 30 min zum Reaktionsslurry getropft. Nach einer weiteren Reaktionszeit von 60 min wird mit Essigsäure neutralisiert und mit 70 %igem Methanol gereinigt.

Die entstandene wasserlösliche DHPSEC weist folgende Kenndaten auf:

| | |
|---|---|
| DS (SE): | 0,21 |
| MS (DHP): | 0,39 |
| $V_2$: | 34.281 mPa.s |

Beispiel 3

Gemäß Beispiel 2 wird eine DHPSEC hergestellt. Nach Beendigung der Veretherung, jedoch vor der Neutralisation, wird abgesaugt. Aus dem Rohprodukt wird das Alkali mit 70 %igem Methanol extrahiert.

Die entstandene DHPSEC weist folgende Kenndaten auf:

| | |
|---|---|
| DS (SE): | 0,21 |
| MS (DHP): | 0,39 |
| $V_2$: | 25.620 mPa.s |

EP 0 470 444 B1

Beispiel 4

In einem mit Inertgas gespülten 3 l-Glasreaktor werden 127 g feingemahlener hochviskoser Holzzellstoff mit 3 l Aceton aufgeschwemmt und mit 47,2 g NaOH (Prills) und 0,31 Mol VSSNa (30 %ige wäßrige Lösung) versetzt. Die Gesamtwassermenge im Slurry wird auf 5 Gew.-% eingestellt. Nach einer Alkalisierzeit von 80 min bei Raumtemperatur wird das Reaktionsgefäß langsam auf 55°C erwärmt. Nach einer Veretherungszeit von 90 min bei 55°C werden 87,3 g Glycidol innerhalb von 30 min zum Reaktionsslurry getropft. Nach einer weiteren Reaktionszeit von 60 min wird mit Essigsäure, welches 2 g Borsäure enthält, neutralisiert und mit 70 %igem Methanol gereinigt.

Die entstandene DHPSEC läßt sich in Wasser leicht dispergieren und bildet schon nach kurzer Zeit ein sehr festes Gel aus. Sie weist folgende Substitutionsgrade auf:

| DS (SE): | 0,19 |
| MS (DHP): | 0,58 |

Beispiel 5

In einem mit Inertgas gespülten 3 l-Glasreaktor werden 127 g feingemahlener niedrigviskoser Holzzellstoff mit 3 l Isopropanol aufgeschwämmt und mit 75,2 g NaOH (Prills) und 0,3 Mol VSSNa (30%ige wäßrige Lösung) versetzt. Die Gesamtmenge im Slurry wird auf 7,5 Gew.-% eingestellt. Nach einer Alkalisierzeit von 80 Minuten bei Raumtemperatur wird das Reaktionsgefäß langsam auf 70°C erwärmt. Nach einer Veretherungszeit von 90 Minuten wird mit Essigsäure neutralisiert und mit 70%igem Methanol gereinigt. Die gereingte SEC wird in einem mit Inertgas gespülten 3-l-Glasreaktor mit 3 l Aceton aufgeschwämmt und mit 15,6 g NaOH (Prills) versetzt, Die Wassermenge im Slurry wird auf 2 Gew.-% eingestellt. Nach einer Alkalisierzeit von 60 Minuten bei Raumtemperatur wird auf 55°C erwärmt und das Glycid (88 g) innerhalb von 60 Minuten zum Reaktionsslurry getropft. Nach einer Veretherungszeit von 90 Minuten wird mit Salpetersäure neutralisiert und mit 70%igem Methanol gereinigt.

Die entstandene wasserlösliche DHPSEC weist folgende Kenndaten auf:

| DS (SI): | 0,18 |
| MS (DHP): | 0,19 |
| $V_2$: | 769 mPa•s |

**Patentansprüche**

1. Celluloseether, dadurch gekennzeichnet, daß sie einen durchschnittlichen Substitutionsgrad mit Sulfoethylgruppen (DS-Sulfoethyl) von 0,05 bis 0,4 und einen molaren Substitutionsgrad mit 1.2-vicinale Dihydroxypropylgruppen (MS-Dihydroxy-propyl) von 0,1 bis 1 aufweisen und in Wasser wenigstens 2 g in 100 g Wasser bei 25°C löslich sind.

2. Celluloseether nach Anspruch 1, dadurch gekennzeichnet, daß der DS-Sulfoethyl 0,1 bis 0,2 und der MS-Dihydroxypropyl 0,2 bis 0,5 beträgt.

3. Celluloseether nach wenigstens einem der vorhergehenden Ansprüche, dadurch gekennzeichnet, daß der Dihydroxypropylsubstituent 2,3-Dihydroxy-propyl ist.

4. Gele auf Basis von Celluloseethern, dadurch gekennzeichnet, daß sie einen Celluloseether gemäß wenigstens einem der vorhergehenden Ansprüche und eine Borverbindung, welche zu einer intermolekularen Vernetzung der Celluloseether führt, enthalten.

5. Verfahren zur Herstellung eines Celluloseethers gemäß einem der Ansprüche 1 - 3, dadurch gekennzeichnet, daß das Verfahren in folgenden Schritten durchgeführt wird:
    a. Bildung einer Alkalicellulose durch Umsetzung von Cellulose mit Alkali,
    b. Umsetzung der Alkalicellulose mit einer Sulfoethylgruppe übertragenen Verbindung,

c. Dihydroxypropylierung nach Abschluß der sulfoethylierung durch Zugabe einer Dihydroxypropylgruppe übertragenen Verbindung.

6. Verwendung der Celluloseether gemäß einem der Ansprüche 1 - 3 als Verflüssiger in Zement- oder Gipsputzsystemen.

7. Verwendung der Celluloseether gemäß einem der Ansprüche 1 - 3 zur Erschließung von Öl- und Erdgaslagerstätten.

**Claims**

1. Cellulose ethers, characterised in that they exhibit an average degree of substitution with sulfoethyl groups (DS-sulfoethyl) of from 0.05 to 0.4 and a molar degree of substitution with 1,2-vicinal dihydroxypropyl groups (MS-dihydroxypropyl) of from 0.1 to 1, and are soluble to the extent of at least 2 g in 100 g water at 25°C.

2. Cellulose ethers according to Claim 1, characterised in that the DS-sulfoethyl is from 0.1 to 0.2, and the MS-dihydroxypropyl is from 0.2 to 0.5.

3. Cellulose ethers according to at least one of the preceding claims, characterised in that the dihydroxypropyl substituent is 2,3-dihydroxypropyl.

4. Gels based on cellulose ethers, characterised in that they contain a cellulose ether in accordance with at least one of the preceding claims and a boron compound which brings about intermolecular cross-linking of the cellulose ethers.

5. Process for the preparation of a cellulose ether in accordance with one of Claims 1 - 3, characterised in that it is carried out in the following steps:
   a. an alkali metal cellulose is formed by reacting cellulose with alkali,
   b. the alkali metal cellulose is reacted with a sulfoethyl group-transferring compound,
   c. dihydroxypropylation is performed by the addition of a dihydroxypropyl group-transferring compound after termination of the sulfoethylation.

6. Use of the cellulose ethers in accordance with one of Claims 1 - 3 as liquefiers in cement or gypsum plastering systems.

7. Use of the cellulose ethers in accordance with one of Claims 1 - 3 for opening up oil and natural gas deposits.

**Revendications**

1. Ethers cellulosiques, caractérisés en ce qu'ils présentent un degré de substitution moyen avec des groupes sulfoéthyle (DS-sulfoéthyle) de 0,05 à 0,4 et un degré de substitution molaire avec des groupes dihydroxypropyle 1,2-vicinaux (MS-dihydroxypropyle) de 0,1 à 1 et en ce qu'ils sont solubles dans l'eau à concurrence d'au moins 2 g dans 100 g d'eau à 25°C.

2. Ethers cellulosiques selon la revendication 1, caractérisés en ce que le DS-sulfoéthyle s'élève de 0,1 à 0,2 et le MS-dihydroxypropyle s'élève de 0,2 à 0,5.

3. Ethers cellulosiques selon au moins une des revendications précédentes, caractérisés en ce que le substituant dihydroxypropyle est le 2,3-dihydroxypropyle.

4. Gels à base d'éthers cellulosiques, caractérisés en ce qu'ils contiennent un éther cellulosique selon au moins l'une des revendications précédentes et un composé de bore qui donne lieu à une réticulation intermoléculaire de l'éther cellulosique.

5. Procédé pour la préparation d'un éther cellulosique selon l'une quelconque des revendications 1-3, caractérisé en ce qu'on effectue le procédé en passant par les étapes ci-après :

a. formation d'une cellulose alcaline par mise en réaction de cellulose avec un alcali,

b. mise en réaction de la cellulose alcaline avec un composé de transfert de groupe sulfoéthyle,

c. dihydroxypropylation au terme de la sulfoéthylation par addition d'un composé de transfert de groupe dihydroxypropyle.

6. Utilisation des éthers cellulosiques selon l'une quelconque des revendications 1-3, comme liquéfacteurs dans des systèmes d'enduits au ciment ou au plâtre.

7. Utilisation des éthers cellulosiques selon l'une quelconque des revendications 1-3, pour la reconnaissance de gisements de pétrole et de gaz naturel.